**Europäisches Patentamt**

**European Patent Office**

**Office européen des brevets**

(19)

(11) Veröffentlichungsnummer : **0 316 625 B1**

## (12) EUROPÄISCHE PATENTSCHRIFT

(45) Veröffentlichungstag der Patentschrift :
**11.09.91 Patentblatt 91/37**

(21) Anmeldenummer : **88117788.5**

(22) Anmeldetag : **26.10.88**

(51) Int. Cl.⁵ : **G01D 5/34**

(54) Lichtelektrische Positionsmesseinrichtung.

(30) Priorität : **17.11.87 DE 3738977**

(43) Veröffentlichungstag der Anmeldung :
**24.05.89 Patentblatt 89/21**

(45) Bekanntmachung des Hinweises auf die
Patenterteilung :
**11.09.91 Patentblatt 91/37**

(84) Benannte Vertragsstaaten :
**AT CH DE ES FR GB IT LI NL SE**

(56) Entgegenhaltungen :
**DE-A- 2 630 880**

(73) Patentinhaber : **Dr. Johannes Heidenhain
GmbH
Dr.-Johannes-Heidenhain-Strasse 5 Postfach
1260
W-8225 Traunreut (DE)**

(72) Erfinder : **Archer, Karl-Heinz
Molbertinger Strasse 4a
W-8227 Siegsdorf (DE)**

EP 0 316 625 B1

## Beschreibung

Die Erfindung betrifft eine lichtelektrische Positionsmeßeinrichtung gemäß dem Oberbegriff des Anspruches 1.

Derartige Positionsmeßeinrichtungen werden insbesondere bei Bearbeitungsmaschinen zum Messen der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Aus der DE-AS 2630880 ist eine Längenmeßeinrichtung zum Messen der Relativlage zweier Objekte in Form eines beweglichen Schlittens und des stationären Betts einer Bearbeitungsmaschine bekannt. Ein Teilungsträger mit einer Teilung ist in einem Gehäuse untergebracht, das am Maschinenbett befestigt ist. Im Gehäuse tastet eine Abtasteinrichtung die Teilung des Teilungsträgers zur Erzeugung von periodischen Abtastsignalen ab und ist über einen Mitnehmer mit dem Maschinenschlitten verbunden. Die Abtasteinrichtung ist ferner über ein elektrisches Kabel mit einer stationären Auswerteeinrichtung verbunden, in der aus den periodischen Abtastsignalen Meßwerte für die Relativlage des Maschinenschlittens bezüglich des Maschinenbetts gebildet werden. Diese Längenmeßeinrichtung weist jedoch den Nachteil auf, daß das elektrische Kabel zwischen der beweglichen Abtasteinrichtung und der stationären Auswerteeinrichtung in Abhängigkeit von der jeweiligen Meßlänge relativ lang sein muß, so daß eine Beschädigung des Kabels nicht ausgeschlossen werden kann. Weiterhin kann die Einkopplung von elektrischen Störsignalen in die einzelnen Leitungen dieses elektrischen Kabels Meßfehler zur Folge haben, so daß eine aufwendige Abschirmung des elektrischen Kabels erforderlich ist.

Der Erfindung liegt die Aufgabe zugrunde, bei einer lichtelektrischen Positionsmeßeinrichtung der genannten Gattung Meßungenauigkeiten durch Störeinflüsse, insbesondere elektrischer und mechanischer sowie thermischer Art, auszuschließen und eine kompaktere Bauform der Meßeinrichtung zu erzielen.

Diese Aufgabe wird erfindungsgemäß durch die kennzeichnenden Merkmale des Anspruchs 1 gelöst.

Die mit der Erfindung erzielten Vorteile bestehen insbesondere darin, daß durch die Auftrennung der Abtasteinrichtung in eine bewegliche Abtasteinheit und in eine stationäre Abtasteinheit die letztere mit der stationären Auswerteeinrichtung über ein elektrisches und/oder optisches Kabel mit minimaler Länge verbunden werden kann. Dieses Kabel kann fest und verdeckt verlegt werden, so daß eine Beschädigung desselben bei Bearbeitungsvorgängen nicht mehr auftreten kann ; ein Metallschutzschlauch für dieses Kabel kann somit entfallen. Eine Abschirmung des Kabels gegen eine Einkopplung von elektrischen Störimpulsen ist wegen der kurzen Baulänge und der verdeckten Verlegung dieses Kabels nicht mehr erforderlich. Da die bewegliche Abtasteinheit keine elektrischen und wärmeerzeugenden Komponenten mehr aufweist, ist sie störunanfälliger und zudem leichter, billiger und kompakter in den Abmessungen. Insgesamt ergibt sich somit eine einfacher aufgebaute und preiswertere Positionsmeßeinrichtung hoher Meßgenauigkeit.

Vorteilhafte Ausbildungen der Erfindung entnimmt man den abhängigen Ansprüchen.

Ausführungsbeispiele der Erfindung werden anhand der Zeichnung näher erläutert.

Es zeigen :

Figur 1    eine erste lichtelektrische Längenmeßeinrichtung in einer Seitenansicht und

Figur 2    eine zweite lichtelektrische Längenmeßeinrichtung in einer Seitenansicht.

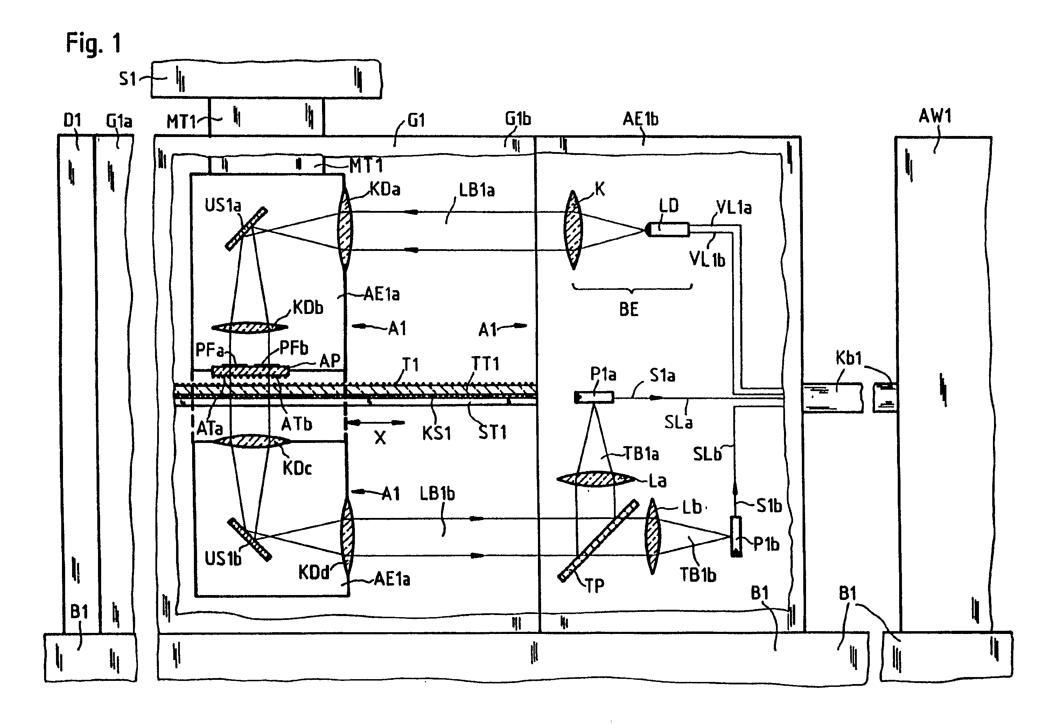

In Figur 1 ist in einer Seitenansicht eine erste lichtelektrische inkrementale Längenmeßeinrichtung zur Messung der Relativlage zweier zueinander in Meßrichtung X beweglicher Objekte S1, B1 dargestellt ; das bewegliche Objekt S1 wird durch einen Schlitten und das stationäre Objekt B1 durch das Bett einer nicht gezeigten Bearbeitungsmaschine gebildet. Am stationären Objekt B1 ist ein Gehäuse G1 in Form eines Hohlprofils an beiden Enden G1a, G1b mittels nicht gezeigter Schrauben befestigt. Im Inneren des Gehäuses G1 ist auf einem Steg ST1 mittels einer elastischen Klebeschicht KS1 ein Teilungsträger TT1 mit einer inkrementalen Teilung T1 angeordnet.

Zur Abtastung der inkrementalen Teilung T1 des Teilungsträgers TT1 ist eine Abtasteinrichtung A1 vorgesehen, die aus einer beweglichen Abtasteinheit AE1a und aus einer stationären Abtasteinheit AE1b besteht. Die bewegliche Abtasteinheit AE1a ist über einen Mitnehmer MT1 mit dem beweglichen Objekt S1 verbunden und im Inneren des Gehäuses G1 in Meßrichtung X längs des Teilungsträgers TT1 parallel zur inkrementalen Teilung T1 verschiebbar. Während das erste offene Ende G1a des Gehäuses G1 durch einen Deckel D1 verschlossen ist, ist das zweite offene Ende G1b des Gehäuses G1 durch die stationäre Abtasteinheit AE1b verschlossen ; diese stationäre Abtasteinheit AE1b ist somit fest mit dem stationären Objekt B1 verbunden. Die stationäre Abtasteinheit AE1b ist ferner über ein elektrisches Kabel KB1 mit einer stationären Auswerteeinrichtung AW1 verbunden, die ebenfalls am stationären Objekt B1 befestigt ist.

Im Inneren der stationären Abtasteinheit AE1b erzeugt eine Leuchtdiode LD ein Lichtstrahlenbündel LB1a, das durch einen Kollimator K parallel gerichtet wird ; die Leuchtdiode LD und der Kollimator K bilden eine Beleuchtungseinheit BE. Das parallele Lichtstrahlenbündel LB1a der stationären Abtasteinheit AE1b durchläuft das Innere des Gehäuses G1 parallel zur Meßrichtung X und tritt durch einen ersten Kondensor KDa in die bewegliche Abtasteinheit AE1a ein. Im Inneren der beweglichen Abtasteinheit AE1a wird das Lichtstrahlenbündel LB1a durch einen ersten Umlenkspiegel US1a senkrecht zur Meßrichtung X umgelenkt, durch einen zweiten Kondensor KDb parallel gerichtet und durchsetzt die Teilung T1 des Teilungsträgers TT1 und nachfolgend zwei Abstastteilungen ATa, ATb einer Abtastplatte AP der beweglichen Abtasteinheit AE1a. Die beiden Abtastteilungen ATa, ATb sind in Meßrichtung X nebeneinander angeordnet und weisen die gleiche Periodenlänge wie die Teilung T1 des Teilungsträgers TT1 auf ; die beiden Abtastteilungen ATa, ATb sind jedoch in Meßrichtung X um ein Viertel der Periodenlänge gegeneinander versetzt und weisen jeweils eine Polarisationsfolie PFa, PFb mit zueinander orthogonaler Polarisationswirkung auf. Das parallele Lichtstrahlenbündel LB1a wird durch die Teilung T1 des Teilungsträgers TT1 und durch die beiden Abtastteilungen ATa, ATb mitsamt den beiden Polarisationsfolien PFa, PFb in ein paralleles moduliertes Lichtstrahlenbündel LB1b mit zwei orthogonal zueinander polarisierten Hälften umgewandelt.

Das modulierte, polarisierte Lichtstrahlenbündel LB1b fällt durch einen dritten Kondensor KDc, wird von einem zweiten Umlenkspiegel US1b wieder parallel zur Meßrichtung X umgelenkt, durchläuft nach dem Durchsetzen eines vierten Kondensors KDd der beweglichen Abtasteinheit AE1a parallel gerichtet das Innere des Gehäuses G1 parallel zur Meßrichtung X und wird durch ein Teilerprisma TP in der stationären Abtasteinheit AE1b in zwei Teilstrahlenbündel TB1a, TB1b mit zueinander orthogonaler Polarisation separiert. Die beiden separierten Teilstrahlenbündel TB1a, TB1b fallen jeweils durch eine Sammellinse La, Lb auf ein zugeordnetes Photoelement P1a, P1b in der stationären Abtasteinheit Ae1b.

Die beiden Photoelemente P1a, P1b erzeugen bei der Meßbewegung der beweglichen Abtasteinheit Ae1a bezüglich des stationären Objekts B1 zwei periodische analoge Abtastsignale S1a, S1b, die entsprechend dem Versatz der beiden Abtastteilungen ATa, ATb um ein Viertel der Periodenlänge in Meßrichtung X um 90° gegeneinander phasenversetzt sind ; dieser Phasenversatz erlaubt die Diskriminierung der Meßbewegung in positiver oder negativer Meßrichtung X. Aus den mittels zweier Signalleitungen SLa, SLb über das elektrische Kabel KB1 an die Auswerteeinrichtung AW1 übertragenen zwei Abtastsignalen S1a, S1b werden in bekannter, nicht dargestellter Weise Meßwerte für die Relativlage des beweglichen Objekts S1 bezüglich des stationären Objekts B1 gewonnen, die in digitaler Form angezeigt werden können. Die Stromversorgung der Leuchtdiode LD der Beleuchtungseinheit BE erfolgt von einer nicht dargestellten Stromquelle in der Auswerteeinrichtung AW1 mittels zweier Versorgungsleitungen VL1a, VL1b über das elektrische Kabel KB1.

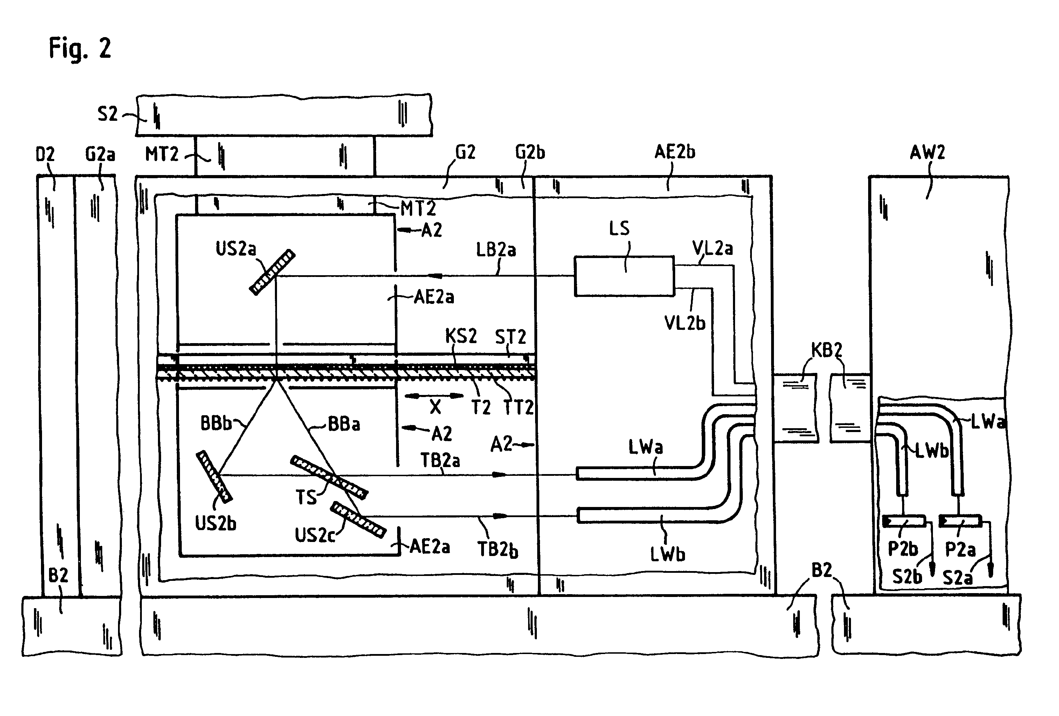

In Figur 2 ist in einer Seitenansicht eine zweite lichtelektrische inkrementale Längenmeßeinrichtung zur Messung der Relativlage zweier zueinander in Meßrichtung X beweglicher Objekte S2, B2 dargestellt ; das bewegliche Objekt S2 werden durch einen Schlitten und das stationäre Objekt B2 durch das Bett einer nicht gezeigten Bearbeitungsmaschine gebildet. Am stationären Objekt B2 ist ein Gehäuse G2 in Form eines Hohlprofils an beiden Enden G2a, G2b mittels nicht gezeigter Schrauben befestigt. Im Inneren des Gehäuses G2 ist auf einem Steg ST2 mittels einer elastischen Klebeschicht KS2 ein Teilungsträger TT2 mit einer inkrementalen Teilung T2 in Form eines Phasengitters angeordnet.

Zur Abtastung der inkrementalen Teilung T2 des Teilungsträgers TT2 ist eine Abtasteinrichtung A2 vorgesehen, die aus einer beweglichen Abtasteinheit AE2a und aus einer stationären Abtasteinheit AE2b besteht. Die bewegliche Abtasteinheit AE2a ist über einen Mitnehmer MT2 mit dem beweglichen Objekt S2 verbunden und im Inneren des Gehäuses G2 in Meßrichtung X längs des Teilungsträgers TT2 parallel zur inkrementalen Teilung T2 verschiebbar. Während das erste offene Ende G2a des Gehäuses G2 durch einen Deckel D2 verschlossen ist, ist das zweite offene Ende G2b des Gehäuses G2 durch die stationäre Abtasteinheit AE2b verschlossen ; diese stationäre Abtasteinheit AE2b ist somit fest mit dem stationären Objekt B2 verbunden. Die stationäre Abtasteinheit AE2b ist ferner über ein Kabel KB2 mit einer stationären Auswerteeinrichtung AW2 verbunden, die ebenfalls am stationären Objekt B2 befestigt ist.

Im Inneren der stationären Abtasteinheit AE2b erzeugt ein Laser LS als Beleuchtungseinheit ein Lichtstrahlenbündel LB2a. Das parallele Lichtstrahlenbündel LB2a der stationären Abtasteinheit AE2b durchsetzt das Innere des Gehäuses G2 parallel zur Meßrichtung X, wird in der beweglichen Abtasteinheit AE2a durch einen ersten Umlenkspiegel US2a senkrecht zur Meßrichtung X umgelenkt und durchsetzt die Teilung T2 des Teilungsträgers TT2 in Form des Phasengitters ; das Phasengitter beugt das einfallende Lichtstrahlenbündel LB2a in ein positives Beugungsstrahlenbündel erster Ordnung BBa und in ein negatives Beugungsstrahlenbündel erster Ordnung BBb. Das negative Beugungsstrahlenbündel BBb wird durch einen zweiten Umlenkspiegel US2b parallel zur Meßrichtung X umgelenkt und interferiert mit dem positiven Beugungsstrahlenbündel BBa in einer Teilerschicht TS. Das von der Teilerschicht TS ausgehende erste Teilstrahlenbündel TB2a verläuft parallel zur Meßrichtung X, während das von der Teilerschicht TS ausgehende zweite Teilstrahlenbündel TB2b durch einen dritten Umlenkspiegel US2c ebenfalls parallel zur Meßrichtung X umgelenkt wird. Die beiden parallelen Teilstrahlenbündel TB2a, TB2b durchlaufen das Innere des Gehäuses G2 parallel zur Meßrichtung X und treten in der stationären Abtasteinheit AE2b jeweils in einen zugehörigen Lichtwellenleiter LWa, LWb ein, die die stationäre Abtasteinheit AE2b mit der stationären Auswerteeinrichtung AW2 verbinden. In der Auswerteeinrichtung AW2 beaufschlagen die beiden von den beiden Lichtwellenleitern LWa, LWb des Kabels KB2 übertragenen Teilstrahlenbündel TB2a, TB2b zugeordnete Photoelemente P2a, P2b, die zwei periodische analoge Abtastsignale S2a, S2b mit einem gegenseitigen Phasenversatz von 180° erzeugen, aus denen wiederum auf die vorgenannte Weise Meßwerte für die Relativlage des beweglichen Objekts S2 bezüglich des stationären Objekts B2 gewonnen werden, die in digitaler Form angezeigt werden können. Die Stromversorgung des Lasers LS erfolgt von einer nicht dargestellten Stromquelle in der Auswerteeinrichtung AW2 mittels zweier Versorgungsleitungen VL2a, VL2b über das Kabel KB2.

In nicht dargestellter Weise können die stationären Abtasteinheiten AE1b, AE2b auch in den zugehörigen Auswerteeinrichtungen AW1, AW2 integriert sein.

Die Erfindung ist bei inkrementalen oder absoluten lichtelektrischen Längen- oder Winkelmeßeinrichtungen sowohl nach dem Durchlichtmeßprinzip als auch nach dem Auflichtmeßprinzip mit Erfolg einsetzbar.

## Patentansprüche

1. Lichtelektrische Positionsmeßeinrichtung zum Messen der Relativlage zweier Objekte, bei der die Teilung eines Teilungsträgers von einer Abtasteinrichtung zur Erzeugung wenigstens eines Abtastsignals abgetastet wird, aus dem in einer stationären Auswerteeinrichtung Meßwerte für die Relativlage der beiden Objekte gebildet werden, die mit dem Teilungsträger und der Abtasteinrichtung verbunden sind, dadurch gekennzeichnet, daß die Abtasteinrichtung (A1 ; A2) aus einer beweglichen Abtasteinheit (AE1a ; AE2a) und aus einer stationären Abtasteinheit (AE1b ; AE2b) besteht, daß die stationäre Abtasteinheit (AE1b ; AE2b) sowie der Teilungsträger (TT1 ; TT2) am stationären Objekt (B1 ; B2) befestigt sind, daß die bewegliche Abtasteinheit (AE1a ; AE2a) mit dem beweglichen Objekt (S1 ; S2) verbunden ist, daß die stationäre Abtasteinheit (AE1b ; AE2b) eine Beleuchtungseinheit (BE ; LS) sowie wenigstens ein Empfangselement (P1a, P1b ; LWa, LWb) und die bewegliche Abtasteinheit (AE1a ; AE2a) optische Elemente (KD, AP, US1, PF ; US2, TS) aufweisen, daß zwischen der beweglichen Abtasteinheit (AE1a ; AE2a) und der stationären Abtasteinheit (AE1b ; AE2b) eine optische Wirkverbindung besteht und daß die stationäre Abtasteinheit (AE1b ; AE2b) mit der Auswerteeinrichtung (AW1 ; AW2) verbunden ist.

2. Meßeinrichtung nach Anspruch 1, dadurch gekennzeichnet, daß die Beleuchtungseinheit (BE) aus einer Leuchtdiode (LD) und aus einem Kollimator (K) besteht.

3. Meßeinrichtung nach Anspruch 1, dadurch gekennzeichnet, daß das wenigstens eine Empfangselement (P1a, P1b) aus einem Photoelement gebildet ist.

4. Meßeinrichtung nach Anspruch 1, dadurch gekennzeichnet, daß das wenigstens eine Empfangselement (LWa, LWb) aus einem Lichtwellenleiter gebildet ist.

5. Meßeinrichtung nach Anspruch 1, dadurch gekennzeichnet, daß die optischen Elemente aus Kondensoren (KD), aus einer Abtastplatte (AP), aus Umlenkspiegeln (US1, US2), aus Polarisationsfolien (PF) und aus einer Teilerschicht (TS) bestehen.

## Claims

1. Photoelectric position measuring device for measuring the relative position of two objects, in which the graduation of a graduation carrier is sensed by a sensing device to generate at least one sensing signal, from which measured values for the relative position of the two objects are formed in a stationary evaluating device, which objects are connected to the graduation carrier and the sensing unit, characterized in that the sensing device (A1 ; A2) consists of a movable sensing unit (AE1a ; AE2a) and of a stationary sensing unit (AE1b ; AE2b), in that the stationary sensing unit (AE1b ; AE2b) as well as the graduation carrier (TT1 ; TT2) are fixed to the stationary object (B1 ; B2), in that the movable sensing unit (AE1a ; AE2a) is connected to the movable object (S1 ; S2), in that the stationary sensing unit (AE1b ; AE2b) comprises an illuminating unit (BE ; LS) as well as at least one receiver element (P1a, P1b ; LWa, LWb) and the movable sensing unit (AE1a ; AE2a) comprises optical elements (KD, AP, US1, PF ; US2, TS), in that an optical coupling exists between the movable sensing unit (AE1a ; AE2a) and the stationary sensing unit (AE1b ; AE2b) and in that the stationary sensing unit (AE1b ; AE2b) is connected to the evaluating device (AW1 ; AW2).

2. Measuring device according to claim 1, characterized in that the illuminating unit (BE) consists of a light-emitting diode (LD) and a collimator (K).

3. Measuring device according to claim 1, characterized in that the at least one receiver element (P1a, P1b) is formed from a photo-element.

4. Measuring device according to claim 1, characterized in that the at least one receiver element (LWa, LWb) is formed from a light guide.

5. Measuring device according to claim 1, characterized in that the optical elements consist of condensers (KD), a sensing plate (AP), deflecting mirrors (US1, US2), polarisation films (PF) and a splitter layer (TS).


**Revendications**

1. Dispositif de mesure de position photoélectrique pour la mesure de la position relative de deux objets, dans lequel la graduation d'un support de graduation est lue par un dispositif de lecture pour fournir au moins un signal de lecture, à partir duquel sont formées, dans une unité d'exploitation fixe, des valeurs de mesure pour la position relative des deux objets, qui sont reliés avec le support de graduation et le dispositif de lecture, **caractérisé** en ce que le dispositif de lecture (A1, A2) se compose d'une unité de lecture mobile (AE1a, AE2a) et d'une unité de lecture fixe (AE1b, AE2b), en ce que l'unité de lecture fixe (AE1b, AE2b) ainsi que le support de graduation (TT1, TT2) sont fixés sur l'objet fixe (B1, B2), en ce que l'unité de lecture mobile (AE1a, AE2a) est reliée à l'objet mobile (S1, S2), en ce que l'unité de lecture fixe (AE1b, AE2b) comporte une unité d'éclairage (BE, LS) ainsi qu'au moins un élément de réception (P1a, P1b, LWa, LWb) et l'unité de lecture mobile (AE1a, AE2a) présente des éléments optiques (KD, AP, US1, PF, US2, TS), en ce qu'une liaison optique est réalisée entre l'unité de lecture mobile (AE1a, AE2a) et l'unité de lecture fixe (AE1b, AE2b) et en ce que l'unité de lecture fixe (AE1b, AE2b) est reliée avec l'unité d'exploitation (AW1, AW2).

2. Dispositif de mesure selon la revendication 1, **caractérisé** en ce que l'unité d'éclairage (BE) est composée d'une diode électro-luminescente (LD) et d'un collimateur (K).

3. Dispositif de mesure selon la revendication 1, **caractérisé** en ce que l'élément de réception (P1a, P1b), au nombre d'au moins un, est formé par une cellule photoélectrique.

4. Dispositif de mesure selon la revendication 1, **caractérisé** en ce que l'élément de réception (LWa, LWb), au nombre d'au moins un, est formé par un guide d'ondes lumineuses.

5. Dispositif de mesure selon la revendication 1, **caractérisé** en ce que les éléments optiques se composent de condenseurs (KD), d'une plaque de lecture (AP), de miroirs de déviation (US1, US2), de films de polarisation (PF) et d'une couche de répartition (TS).

Fig. 1

AW1

Kb1

B1

B1

AE1b

VL1a
LD
VL1b
BE
K

S1b
P1b
SLb
Lb
TB1b

S1a
SLa
TB1a
La
P1a
TP

G1b
G1

LB1a
A1
TT1
ST1
T1
KS1
X

MT1
KDa
AE1a
A1
A1
LB1b
AE1a
KDd

US1a
KDb
PFb
AP
ATb
KDc
US1b

PFa
ATa

MT1
S1
G1a
D1
B1

Fig. 2

EP 0 316 625 B1